# EUROPÄISCHE PATENTANMELDUNG

(11) **EP 4 413 837 A2**
(43) Veröffentlichungstag der Anmeldung: **14.08.2024**
(21) Anmeldenummer: 23207617.4
(22) Anmeldetag: 03.11.2023
(51) Int. Cl.: A01B 39/22, A01B 63/24, A01B 39/04, A01B 63/22

(54) **BREITENVARIABLES BODENBEARBEITUNGSGERÄT**

(30) Priorität: 08.02.2023 DE 102023103058; 03.05.2023 DE 202023102385 U
(71) Anmelder: Treffler Maschinenbau GmbH & Co. KG, 86554 Pöttmes-Echsheim (DE)
(72) Erfinder: Engelberth, Rath, 93102 Pfatter (DE)
(74) Vertreter: TBK

(57) **Zusammenfassung**

Ein breitenvariables Bodenbearbeitungsgerät (1) hat einen Rahmen; einen führenden ersten Viergelenk-Führungsmechanismus, der mit dem Rahmen verbunden ist und ein Tiefenführungselement (12), das auf dem Boden fährt, um eine Höhe des ersten Führungsmechanismus über den Boden zu regulieren, sowie ein Stellglied hat, das die Höhe des ersten Führungsmechanismus zwischen einer bodennahen Arbeitsposition, in welcher er durch das Tiefenführungselement geführt wird, und einer bodenfernen Aushubposition betätigt, in welcher er nicht durch das Tiefenführungselement geführt wird; einen nachlaufenden zweiten Führungsmechanismus (20), der mit dem Rahmen verbunden ist und mindestens ein Werkzeug zur Bodenbearbeitung hat; ein Verbindungsbauteil (22), welches den ersten Führungsmechanismus und den zweiten Führungsmechanismus derart verbindet, dass der zweite Führungsmechanismus der Höhe des ersten Führungsmechanismus folgt und der zweite Führungsmechanismus in einer Querrichtung, die quer zu der Fahrtrichtung des Rahmens verläuft, bewegt, vorzugsweise verschoben, werden kann; und eine Breitenverstelleinheit (22), die einen Abstand in der Querrichtung zwischen dem ersten Führungsmechanismus und dem zweiten Führungsmechanismus verstellen kann.

## Beschreibung

### Technisches Gebiet der Erfindung

Die vorliegende Erfindung betrifft ein breitenvariables Bodenbearbeitungsgerät.

### Stand der Technik

Im Stand der Technik sind verschiedene Bodenbearbeitungsgeräte bekannt. Ein Bodenbearbeitungsgerät ist ein landwirtschaftliches Gerät zur Bodenbearbeitung, das für die Boden- und Saatbearbeitung von Kulturpflanzen im landwirtschaftlichen Ackerbau geeignet ist. Verwendet wird dieses Gerät unter anderem als Pflegegerät für den Anbau von Kartoffeln, Mais, Bohnen, Salat, Raps, allgemeinem Gemüse und Getreide, die vorzugsweise in Reihe gesät werden. Ein Beispiel für ein Bodenbearbeitungsgerät ist eine in Patentdokument 1 offenbarte Egge, bei welcher der Boden mit einem konstanten Zinkendruck bearbeitet wird.

Das Bodenbearbeitungsgerät wird mithilfe eines Zugfahrzeugs, beispielsweise eines Traktors, in einer Fahrtrichtung bewegt, um mit situationsabhängigen Werkzeugen, beispielsweise Zinken, Schneidscheiben oder Hackgeräten, den Boden darunter zu bearbeiten. Dabei kann die Bodenbearbeitung sowohl eine Bearbeitung von in dem Erdreich gepflanzten Pflanzenreihen als auch eine Bearbeitung des Erdreichs neben den Pflanzenreihen umfassen.

Je nach Einsatzzweck kann das Werkzeug relativ zu dem Rahmen höhenverstellbar und/oder verschwenkbar sein sowie mit einem Tiefenführungselement wie beispielsweise eine Rolle versehen sein, sodass die Eindringtiefe in den zu bearbeitenden unebenen Boden auf einem eingestellten Niveau konstant bleibt (Höhenregulierung). Darüber hinaus sind Ansätze für einen Sektionsaushub bekannt, bei welchem einzelne Werkzeuge ausgehoben werden, um am Feldrand, am Vorgewende oder bei Hindernissen Teilbreiten der Bearbeitung (einzelne Werkzeugreihen) abzuschalten und so Überlappungen zu vermeiden.

Um eine ausreichende Aushubhöhe zu gewährleisten, schlägt Patentdokument 2 vor, ein Gelenkviereck als ein Führungsmechanismus vorzusehen, der ein Werkzeug entlang einer vorgesehenen Führungskurve führen kann. Nach Patentdokument 2 ist ein Viergelenk-Führungsmechanismus aus vier Gliedern mit vier dazwischen angeordneten Gelenken vorgesehen. Durch diesen Grundaufbau wird ein Führungsmechanismus umgesetzt, der in der Lage ist, ein Werkzeug entlang der Aushubrichtung zu führen. Die Begriffe "Führungsmechanismus", "Viergelenk", "angelenkt" und "Tiefenführungselement" aus Patentdokument 2 werden in der vorliegenden Anmeldung analog verwendet, daher sind ihre Definitionen und alle damit unmittelbar zusammenhängende Ausführungen in [0006] bis [0008] sowie [0050] bis [0056] des Patentdokuments 2 ausdrücklich durch Bezugnahme hierin aufgenommen.

Da das Bodenbearbeitungsgerät eine gewisse Breite hat, kann es eine Fläche in Form eines Streifens mit konstanter oder variabler Breite bearbeiten. Die Breite des Streifens wird herkömmlicherweise durch den Abstand zwischen den äußersten Werkzeugen bestimmt, die in einer oder mehreren Werkzeugreihen in der Querrichtung angeordnet sind. Um die Breite des Streifens variabel statt konstant zu gestalten, ist aus Patentdokument 3 eine Vorrichtung bekannt, die den Aushub eines Teils der Werkzeuge ermöglicht. Hierfür schlägt Patentdokument 3 das Zu- und Abschalten von äußeren Werkzeugreihen durch Ausheben, um die Teilbreite und/oder eine Bearbeitungsbreite neben den Pflanzenreihen einzustellen.

Die Einstellschritte der Teilbreiten sowie der Bearbeitungsbreite neben den Pflanzenreihen werden beim Aufbau nach Patentdokument 3 durch den Abstand zwischen den Werkzeugen bestimmt, der vorzugsweise dem Abstand zwischen den Pflanzenreihen oder einem gemeinen Bruchteil davon entspricht. Beispielsweise ist die Anzahl Werkzeuge pro Pflanzenreihe drei, sodass der Abstand zwischen den Werkzeugen ein Drittel des Pflanzenreihenabstands beträgt. Demzufolge ist die Präzision bzw. Auflösung der Breitenverstellung durch die Anordnungsdichte der Werkzeuge beschränkt. Falls jedoch solche Abstände zwischen den Pflanzenreihen oder Bearbeitungsbreiten neben den Pflanzenreihen auftreten, die die Auflösung unterschreiten, d.h. falls der Abstand zwischen den Werkzeugen verkleinert werden muss, ist bei der Vorrichtung von Patentdokument 3 ein Umrüsten erforderlich, damit die Werkzeugreihen neu ausgerichtet werden. Demzufolge ist die Präzision der Einstellung eingeschränkt, und die Anzahl der Einsatzfälle, die ohne Umrüstzeiten abgedeckt werden können, ist durch den Abstand zwischen den Werkzeugen beschränkt.

### Dokumente des Standes der Technik

Patentdokument 1: DE 39 00 100 A1
Patentdokument 2: DE 20 2021 102 484 U1
Patentdokument 3: europäische Patentanmeldung EP23157298.3, eingereicht am 17.02.2023

### Zusammenfassung der Erfindung

Der Erfindung liegt die Aufgabe zugrunde, ein Bodenbearbeitungsgerät bereitzustellen, welches ohne Umrüstzeiten und mit hoher Präzision eine große Anzahl verschiedener Einsatzfälle abdeckt.

Diese Aufgabe wird durch ein Bodenbearbeitungsgerät gemäß Anspruch 1 oder ein Bodenbearbeitungsgerät gemäß Anspruch 2 gelöst. Vorteilhafte Weiterbildungen sind Gegenstand der Unteransprüche.

In einer ersten Gestaltung der Erfindung ist ein Breitenvariables Bodenbearbeitungsgerät mit einem hinter einem Zugfahrzeug zu ziehenden Rahmen sowie einem ersten Führungsmechanismus versehen, der als führender Viergelenk-Führungsmechanismus ausgeführt ist und mit dem Rahmen verbunden ist. Der erste Führungsmechanismus hat ein Tiefenführungselement, das auf dem Boden fährt, um eine Höhe des ersten Führungsmechanismus über den Boden zu regulieren, und ein Stellglied, das die Höhe des ersten Führungsmechanismus zwischen einer bodennahen Arbeitsposition, in welcher der erste Führungsmechanismus durch das Tiefenführungselement geführt wird, und einer bodenfernen Aushubposition betätigt, in welcher der erste Führungsmechanismus nicht durch das Tiefenführungselement geführt wird. Das breitenvariable Bodenbearbeitungsgerät hat ferner einen zweiten Führungsmechanismus, der als nachlaufender Führungsmechanismus ausgeführt ist, mit dem Rahmen verbunden ist und mindestens ein Werkzeug zur Bodenbearbeitung hat, sowie ein Verbindungsbauteil, welches den ersten Führungsmechanismus und den zweiten Führungsmechanismus derart verbindet, dass der zweite Führungsmechanismus der Höhe des ersten Führungsmechanismus folgt und der zweite Führungsmechanismus in einer Querrichtung, die quer zu der Fahrtrichtung des Rahmens verläuft, bewegt, vorzugsweise verschoben, werden kann. Darüber hinaus hat das breitenvariable Bodenbearbeitungsgerät eine Breitenverstelleinheit, die einen Abstand in der Querrichtung zwischen dem ersten Führungsmechanismus und dem zweiten Führungsmechanismus verstellen kann.

Durch den vorstehend beschriebenen Aufbau ist das erfindungsgemäße breitenvariable Bodenbearbeitungsgerät in der Lage, den Abstand zwischen dem ersten Führungsmechanismus und dem zweiten Führungsmechanismus in kurzer Zeit, stufenlos und mit hoher Präzision zu verstellen (Breitenverstellung). Dadurch kann das breitenvariable Bodenbearbeitungsgerät ohne Umrüstzeiten an Änderungen sowohl des Abstands zwischen den Pflanzenreihen als auch der Bearbeitungsbreite neben den Pflanzenreihen reagieren. Selbst wenn nur ein einzelnes Werkzeug an dem zweiten Führungsmechanismus vorgesehen ist, kann das erfindungsgemäße breitenvariable Bodenbearbeitungsgerät dieses Werkzeug auf einen relativen Versatz zwischen Pflanzenreihe bzw. Bearbeitungsort und Bearbeitungsgerät reagieren, was einen Bearbeitungswechsel über oder zwischen den Pflanzenreihen, je nach Wachstumsstadium, ermöglicht.

Demzufolge ist das Einsatzspektrum sehr breit, sodass das erfindungsgemäße breitenvariable Bodenbearbeitungsgerät eine große Anzahl verschiedener Einsatzfälle abdecken kann.

Zudem ist der erste Führungsmechanismus als Viergelenk-Führungsmechanismus ausgeführt und hat das Tiefenführungselement und das Stellglied. Somit kann der erste Führungsmechanismus eine optimale Aushubhöhe erreichen und seine Höhe über den Boden optimal führen. Darüber hinaus ist der zweite Führungsmechanismus mit dem Verbindungsbauteil mit dem ersten Führungsmechanismus verbunden und folgt seiner Höhe. Aus diesem Grund wird der erste Führungsmechanismus, der die Höhe führt, als führender Führungsmechanismus bezeichnet, und der zweite Führungsmechanismus, der der Höhe des ersten Führungsmechanismus folgt, wird als nachlaufender Führungsmechanismus bezeichnet. Durch das Nachlaufen des zweiten Führungsmechanismus kann die korrekte Eindringtiefe des Werkzeugs, das an dem zweiten Führungsmechanismus vorgesehen ist, mit einem einfachen Aufbau gewährleistet werden, ohne ein weiteres Tiefenführungselement vorsehen zu müssen. Gleichermaßen kann der zweite Führungsmechanismus ohne ein eigenes Stellglied ausgehoben werden, was den Aufbau weiter vereinfacht.

Da der erste Führungsmechanismus als führender Viergelenk-Führungsmechanismus ausgeführt ist und der zweite Führungsmechanismus diesem folgt bzw. nachläuft, ist es zudem nicht erforderlich, den zweiten Führungsmechanismus als Viergelenk-Führungsmechanismus auszuführen. Stattdessen kann ein einzelnes Glied, beispielsweise eine einfache Schwenkstange, die im Wesentlichen dem unteren Glied des Viergelenk-Führungsmechanismus entspricht, als der zweite Führungsmechanismus zum Einsatz kommen, um den Aufbau weiter zu vereinfachen. Demgemäß ist ein einfacher, passiver Aufbau vorgesehen, bei welchem lediglich der erste Führungsmechanismus ein Tiefenführungselement zur Höhenregulierung und/oder ein Stellglied für den Aushub aufweist.

In einer zweiten Gestaltung der Erfindung hat ein erfindungsgemäßes breitenvariables Bodenbearbeitungsgerät einen hinter einem Zugfahrzeug zu ziehenden Rahmen, einen ersten Führungsmechanismus, der als Viergelenk-Führungsmechanismus ausgeführt ist, und einen zweiten Führungsmechanismus, der als Viergelenk-Führungsmechanismus ausgeführt ist und mindestens ein Werkzeug zur Bodenbearbeitung hat. Jeder des ersten Führungsmechanismus und des zweiten Führungsmechanismus ist mit dem Rahmen verbunden und hat ein Tiefenführungselement, das auf dem Boden fährt, um eine Höhe des jeweiligen Führungsmechanismus über den Boden zu regulieren. Mindestens einer von dem ersten Führungsmechanismus und dem zweiten Führungsmechanismus hat ein Stellglied, das die Höhe des jeweiligen Führungsmechanismus zwischen einer bodennahen Arbeitsposition, in welcher der jeweilige Führungsmechanismus durch sein Tiefenführungselement geführt wird, und einer bodenfernen Aushubposition betätigt, in welcher der jeweilige Führungsmechanismus nicht durch sein Tiefenführungselement geführt wird. Darüber hinaus hat das breitenvariable Bodenbearbeitungsgerät eine Breitenverstelleinheit, die einen Abstand in einer Querrichtung, die quer zu der Fahrtrichtung des Rahmens verläuft, zwischen dem ersten Führungsmechanismus und dem zweiten Führungsmechanismus verstellen kann.

Durch den vorstehend beschriebenen Aufbau ist das erfindungsgemäße breitenvariable Bodenbearbeitungsgerät in der Lage, den Abstand zwischen dem ersten Führungsmechanismus und dem zweiten Führungsmechanismus in kurzer Zeit, stufenlos und mit hoher Präzision zu verstellen. Dadurch kann das breitenvariable Bodenbearbeitungsgerät ohne Umrüstzeiten an Änderungen sowohl des Abstands zwischen den Pflanzenreihen als auch der Bearbeitungsbreite neben den Pflanzenreihen reagieren. Selbst wenn nur ein einzelnes Werkzeug an dem zweiten Führungsmechanismus vorgesehen ist, kann das erfindungsgemäße breitenvariable Bodenbearbeitungsgerät dieses Werkzeug auf einen relativen Versatz zwischen Pflanzenreihe bzw. Bearbeitungsort und Bearbeitungsgerät reagieren, was einen Bearbeitungswechsel über oder zwischen den Pflanzenreihen, je nach Wachstumsstadium, ermöglicht.

Demzufolge ist das Einsatzspektrum sehr breit, sodass das erfindungsgemäße breitenvariable Bodenbearbeitungsgerät eine große Anzahl verschiedener Einsatzfälle abdecken kann.

Da sowohl der erste Führungsmechanismus als auch der zweite Führungsmechanismus jeweils Viergelenk-Führungsmechanismen mit jeweils eigenem Tiefenführungselement sind, ist zudem eine optimale Höhenregulierung erzielbar. Unabhängig davon können die Viergelenk-Führungsmechanismen bedarfsgerecht mit Stellgliedern für den Aushub vorgesehen werden.

Vorzugsweise ist der erste Führungsmechanismus derart mit dem Rahmen verbunden, dass er in der Querrichtung relativ zu dem Rahmen nicht beweglich ist, vorzugsweise nicht verschieblich ist.

Es gibt Einsatzfälle, in welchen der Versatz zu der Pflanzenreihe (im Falle eines einzelnen ersten Führungsmechanismus) und/oder der Abstand zwischen den Pflanzenreihen (im Falle mehrerer erster Führungsmechanismen) nicht veränderlich ist. In diesen Fällen ist es nicht erforderlich, den ersten Führungsmechanismus in der Querrichtung zu verstellen. Somit kann vorteilhafterweise für jede Pflanzenreihe ein erster Führungsmechanismus direkt über der Pflanzenreihe und mindestens ein zweiter Führungsmechanismus neben der Pflanzenreihe vorgesehen werden. Da der Ort der Pflanzenreihe/n relativ zu dem Bodenbearbeitungsgerät konstant ist, kann der erste Führungsmechanismus ortsfest vorgesehen werden, und der zweite Führungsmechanismus kann die Bearbeitungsbreite neben den Pflanzenreihen verstellen. Demzufolge wird der Aufbau vereinfacht und somit kostengünstig gestaltet.

Alternativ ist der erste Führungsmechanismus derart mit dem Rahmen verbunden, dass er in der Querrichtung relativ zu dem Rahmen beweglich, vorzugsweise verschieblich, ist.

Damit kann ein Versatz zu der Pflanzenreihe in der Querrichtung ausgeglichen werden. Sind mehrere erste Führungsmechanismen vorgesehen, kann zudem der Abstand zwischen den Pflanzenreihen ebenfalls mit hoher Präzision angepasst werden.

Vorzugsweise ändert die Breitenverstelleinheit den Abstand in der Querrichtung zwischen dem ersten Führungsmechanismus und dem zweiten Führungsmechanismus gleichmäßig relativ zu dem Rahmen.

Der vorgenannte Aufbau ist zweckmäßig, wenn die Bearbeitung mit dem ersten und zweiten Führungsmechanismus lediglich neben der Pflanzenreihe und nicht über der Pflanzenreihe erfolgt. In diesem Zusammenhang bedeutet "gleichmäßig", dass ein fixer Bezugspunkt an dem Rahmen definiert werden kann, welcher zwischen dem ersten Führungsmechanismus und dem zweiten Führungsmechanismus liegt und relativ zu welchem sich die Abstände zu dem ersten Führungsmechanismus und dem zweiten Führungsmechanismus im Verhältnis von 1:1 verändern lassen.

Vorzugsweise ist der zweite Führungsmechanismus ein Viergelenk-Führungsmechanismus und hat ein/das Tiefenführungselement sowie ein Stellglied, das die Höhe des zweiten Führungsmechanismus zwischen seiner Arbeitsposition und seiner Aushubposition betätigt.

Demgemäß kann der zweite Führungsmechanismus unabhängig von dem ersten Führungsmechanismus ausgehoben werden, wodurch das Einsatzspektrum weiter vergrößert wird. Zudem werden die Höhenregulierung sowie die Führung des Werkzeugs entlang der vorgesehenen Führungskurve verbessert.

Alternativ ist der erste Führungsmechanismus ein führender Führungsmechanismus, der das Stellglied hat, und der zweite Führungsmechanismus ist ein nachlaufender Führungsmechanismus, der mit einem Verbindungsbauteil versehen ist, welches den ersten Führungsmechanismus und den zweiten Führungsmechanismus derart verbindet, dass der zweite Führungsmechanismus der Höhe des ersten Führungsmechanismus folgt und der zweite Führungsmechanismus in einer Querrichtung, die quer zu der Fahrtrichtung des Rahmens verläuft, bewegt, vorzugsweise verschoben, werden kann.

Wie vorstehend beschrieben, kann durch das Nachlaufen des zweiten Führungsmechanismus die korrekte Eindringtiefe des Werkzeugs, das an dem zweiten Führungsmechanismus vorgesehen ist, mit einem einfachen Aufbau gewährleistet werden, ohne ein weiteres Tiefenführungselement vorsehen zu müssen. Gleichermaßen kann der zweite Führungsmechanismus ohne ein eigenes Stellglied ausgehoben werden, was den Aufbau weiter vereinfacht. In einem solchen Fall kann es zudem vorteilhaft sein, ein vertikales Spiel zwischen dem ersten Führungsmechanismus und dem zweiten Führungsmechanismus vorzuhalten, sodass der zweite Führungsmechanismus der Höhenregulierung seines Tiefenführungselements ohne Rückkopplung auf den ersten Führungsmechanismus folgen kann und dennoch durch den ersten Führungsmechanismus ausgehoben werden kann.

Vorzugsweise kann das Verbindungsbauteil die Verbindung zum Übertragen von Kräften in vertikaler Richtung zwischen dem ersten Führungsmechanismus und dem zweiten Führungsmechanismus unterbrechen. Demgemäß kann der zweite Führungsmechanismus von dem ersten Führungsmechanismus entkoppelt werden, sodass die Höhenregulierung und der Aushub separat erfolgen können, um das Einsatzspektrum weiter zu vergrößern.

Vorzugsweise hat das breitenvariable Bodenbearbeitungsgerät mindestens einen weiteren zweiten Führungsmechanismus. Dadurch wird das Einsatzspektrum weiter vergrößert. Besonders vorteilhaft ist dieser Aufbau in Kombination mit dem Verbindungsbauteil und der nachlaufenden Gestaltung des zweiten Führungsmechanismus, wodurch der Aufbau noch weiter vereinfacht wird.

Vorzugsweise sind alle zweite Führungsmechanismen auf beiden Seiten des ersten Führungsmechanismus in der Querrichtung aufgeteilt. Auf diese Weise wird eine symmetrische Bodenbearbeitung neben den Pflanzenreihen erzielt. Zudem wird das Einsatzspektrum weiter vergrößert. Beispielsweise kann der erste Viergelenk-Führungsmechanismus mit einem Werkzeug versehen sein, das die Pflanzenreihe bearbeitet, und die zweiten Führungsmechanismen können mit Werkzeugen versehen sein, die den Boden links und rechts neben der Pflanzenreihe bearbeiten. Besonders vorteilhaft ist dieser Aufbau, wenn eine gerade Anzahl von zweiten Führungsmechanismen vorgesehen und gleichmäßig aufgeteilt ist.

Alternativ sind alle zweite Führungsmechanismen auf einer Seite des ersten Führungsmechanismus in der Querrichtung angeordnet. Auf diese Weise wird der Aufbau weiter vereinfacht und das Einsatzspektrum wird weiter vergrößert. Beispielsweise können der erste Führungsmechanismus und die zweiten Führungsmechanismen jeweils Werkzeuge zur Bearbeitung einer Pflanzenreihe haben, sodass alle erste und zweite Führungsmechanismen je eine Pflanzenreihe bearbeiten.

Vorzugsweise ist das Verbindungsbauteil ein Winkelteiler, der zwei Gelenkglieder, wovon eines an dem ersten Führungsmechanismus angelenkt ist und das andere an dem zweiten Führungsmechanismus angelenkt ist, und ein Mittelteil aufweist, an welchem die zwei Gelenkglieder angelenkt sind. Dadurch wird ein einfacher, kostengünstiger Aufbau erzielt. Das Mittelteil kann beispielsweise eine Platte sein, die zwei Bolzen hat, um die Gelenkglieder anzulenken. Die Gelenkglieder sind vorzugsweise über eine Verzahnung derart verbunden, dass eine gedachte Linie, die in der Mitte des Mittelteils normal auf das Mittelteil fällt, den Winkel zwischen den Gelenkgliedern halbiert. Damit wird die Stabilität der Kraftübertragung weiter verbessert, da die Kraftübertragung symmetrisch von einem Gelenkglied zum Mittelteil und vom Mittelteil zum anderen Gelenkglied erfolgt. Alternativ kann das Mittelteil selbst ein Bolzen sein, sodass die Gelenkglieder gegenseitig aneinander angelenkt sind.

Vorzugsweise haben die Gelenkglieder ihre Anlenkachsen und ihre Breite in der vertikalen Richtung. Mit anderen Worten sind die Gelenkglieder vorzugsweise um Achsen schwenkbar, die vertikal verlaufen. Dadurch können die vertikalen Nachlauf-Kräfte zur Höhenregulierung und zum Aushub mit minimalem Materialeinsatz übertragen werden, wodurch der Aufbau vereinfacht wird und eine Kostenersparnis erzielt wird.

Alternativ haben die Gelenkglieder ihre Anlenkachsen in der horizontalen Richtung. Beispielsweise können die Gelenkglieder Teil eines Viergelenks sein, welches vertikale Nachlauf-Kräfte überträgt. Dadurch wird die Nachlauf-Präzision verbessert.

Alternativ ist das Verbindungsbauteil ein linear verstellbarer Mechanismus. Dadurch wird der Aufbau vereinfacht. Vorzugsweise ist der linear verstellbare Mechanismus als Teleskoprohr ausgeführt. Dies ist eine besonders einfache und kostengünstige Möglichkeit, einen linear verstellbaren Mechanismus vorzusehen.

Vorzugsweise ist der linear verstellbare Mechanismus als lineares Stellglied ausgeführt, das den Abstand in der Querrichtung einstellt und Kräfte in der vertikalen Richtung überträgt. Demgemäß ist das Verbindungsbauteil gleichzeitig ein Stellglied, dass den Abstand zwischen dem ersten Führungsmechanismus und dem zweiten Führungsmechanismus einstellen kann, sodass das Verbindungsbauteil ein Teil der Breitenverstelleinheit ist bzw. eine Funktionseinheit mit der Breitenverstelleinheit bildet. Dadurch wird die Anzahl Komponenten verringert, und der Aufbau wird weiter vereinfacht.

Vorzugsweise weist die Breitenverstelleinheit eine Verschubstange auf, an welcher der zweite Führungsmechanismus angelenkt ist, und/oder weist eine Verschubstange auf, an welcher der erste Führungsmechanismus angelenkt ist.

Die Verschubstange ist eine in der Querrichtung verlaufende Stange mit beliebigem Querschnitt, mit welcher der jeweilige Führungsmechanismus derart verbunden ist, dass er nach oben und unten schwenken kann (d.h. angelenkt ist). Damit wird ein einfacher und stabiler Aufbau erzielt.

Vorzugsweise hat eine Verschiebung der Verschubstange in der Querrichtung eine Bewegung, vorzugsweise Verschiebung, des dazugehörigen Führungsmechanismus in der Querrichtung zur Folge, und die Verschubstange wird über ein Verschubstellglied betätigt. Demgemäß kann das Verschubstellglied über die Verschubstange den dazugehörigen Führungsmechanismus in der Querrichtung verschieben. Mit anderen Worten folgt der Führungsmechanismus der Verschubstange in der Querrichtung, womit ein einfacher und robuster Aufbau umgesetzt wird. Beispielsweise, wenn der erste Führungsmechanismus ortsfest ist und der zweite Führungsmechanismus an der Verschubstange angelenkt ist, kann das Verschubstellglied den Abstand zwischen dem ersten Führungsmechanismus und dem zweiten Führungsmechanismus einstellen. Demzufolge sind die Verschubstange und das Verschubstellglied Teile der Breitenverstelleinheit.

Vorzugsweise sind mehrere zweite Führungsmechanismen mit einer gemeinsamen Verschubstange verbunden, sodass die mehreren zweiten Führungsmechanismen bei einer Betätigung der Verschubstange gemeinsam verschoben werden. Damit wird der Aufbau weiter vereinfacht, und die Anzahl Stellglieder, die vorzusehen sind, wird verringert.

Alternativ ist der zweite Führungsmechanismus gleitbar auf der Verschubstange gelagert, sodass er in der Querrichtung beweglich, vorzugsweise verschieblich, ist, und der zweite Führungsmechanismus wird über ein Verschubstellglied in der Querrichtung betätigt. Demgemäß wird die Verschubstange nicht zusammen mit dem zweiten Führungsmechanismus verschoben. Folglich sind zur Verstellung kleinere Kräfte erforderlich, was den Einsatz eines kleineren Verschubstellglieds und somit eine Kostenersparnis ermöglicht. Zudem bietet dieser Aufbau zusätzliche Flexibilität, da weitere Komponenten an der Verschubstange angebracht werden können, ohne durch die Breitenverstellung beeinträchtigt zu werden.

Vorzugsweise werden mehrere zweite Führungsmechanismen durch ein gemeinsames Verschubstellglied betätigt. Damit wird der Aufbau weiter vereinfacht, und die Anzahl Stellglieder, die vorzusehen sind, wird verringert.

Vorzugsweise hat das breitenvariable Bodenbearbeitungsgerät ferner eine Führungsstange, auf der der erste Führungsmechanismus und/oder der zweite Führungsmechanismus gleitbar gelagert ist/sind, sodass die Führungsstange nicht in der Querrichtung verschoben wird, wenn der darauf gelagerte Führungsmechanismus in der Querrichtung verschoben wird. Demgemäß wird die Stabilität des gesamten Aufbaus weiter verbessert. Da die Führungsstange nicht in der Querrichtung verschoben werden muss, bietet sie eine Verbesserung der Stabilität, ohne die Komplexität wesentlich zu erhöhen.

Vorzugsweise hat der zweite Führungsmechanismus eine Verstärkungsstrebe, wovon ein Ende an der Verschubstange angelenkt oder verbunden ist und das andere Ende an dem zweiten Führungsmechanismus angelenkt oder verbunden ist. Damit kann der zweite Führungsmechanismus mit einem einfachen Aufbau hohe Kräfte in der Querrichtung aufnehmen. Demgemäß werden die Stabilität während der Verstellung sowie die seitliche Führung des Werkzeugs verbessert.

Vorzugsweise wird/werden das Stellglied des ersten Führungsmechanismus und/oder das Stellglied des zweiten Führungsmechanismus und/oder das Verschubstellglied hydraulisch betätigt. Durch ein hydraulisches Stellglied können sehr hohe Aushub- und Verstellkräfte aufgebracht werden, was insbesondere bei schweren Werkzeugen vorteilhaft ist. Zudem weisen hydraulische Stellglieder einen geringen Platzbedarf auf, womit ein platzsparender Aufbau möglich ist. Ferner ist an Zugmaschinen wie Traktoren häufig eine hydraulische Druckleitung bereits vorhanden, sodass das hydraulische Stellglied keine gesonderte Pumpe oder andere Vorrichtung zur Druckerzeugung benötigt. In einem solchen Fall ist ein kostengünstiger Aufbau möglich.

Alternativ oder zusätzlich wird/werden das Stellglied des ersten Führungsmechanismus und/oder das Stellglied des zweiten Führungsmechanismus und/oder das Verschubstellglied elektromechanisch betätigt. In diesem Fall wird der Aufbau dahingehend vereinfacht, dass keine Einrichtung zur Druckerzeugung erforderlich ist, was zudem den Platzbedarf reduziert. Zudem wird die Präzision der Verstellung verbessert.

Alternativ oder zusätzlich wird/werden das Stellglied des ersten Führungsmechanismus und/oder das Stellglied des zweiten Führungsmechanismus und/oder das Verschubstellglied manuell betätigt. Damit wird ein äußerst einfacher und kostengünstiger Aufbau erzielt. Eine manuelle Betätigung ist besonders vorteilhaft, wenn keine Verstellung während der Fahrt benötigt wird.

Vorzugsweise hat der erste Führungsmechanismus ebenfalls mindestens ein Werkzeug zur Bodenbearbeitung. Damit wird die Anzahl Werkzeuge, die den Boden gleichzeitig bearbeiten, erhöht, wodurch die Produktivität gesteigert wird.

Vorzugsweise ist das Werkzeug oder mindestens eines der Werkzeuge eine Schneidscheibe. Alternativ oder zusätzlich ist das Werkzeug oder mindestens eines der Werkzeuge ein Hackgerät, beispielsweise eine Gänsefußschare. Alternativ oder zusätzlich ist das Werkzeug oder mindestens eines der Werkzeuge ein Zinken. Diese Werkzeugarten profitieren in besonders hohem Maße von der erfindungsgemäßen Breitenverstellung. Falls mindestens eines der Werkzeuge eine Schneidscheibe ist, ist es für das Einsatzspektrum noch bevorzugter, wenn ein Arbeitswinkel der Schneidscheibe verstellbar ist.

Vorzugsweise ist das Tiefenführungselement ein Stützrad. Dadurch wird ein einfacher Aufbau gewährleistet. Ferner ist das Stützrad durch seinen geringen Rollwiderstand insbesondere im Hinblick auf den Kraftstoffverbrauch des Zugfahrzeugs vorteilhaft. Alternativ ist das Tiefenführungselement ein Schlitten. Dadurch wird ein einfacher, robuster und wartungsfreier Aufbau gewährleistet.

Kurzbeschreibung der Zeichnungen
Fig. 1 ist eine perspektivische Ansicht eines breitenvariablen Bodenbearbeitungsgeräts gemäß einem ersten Ausführungsbeispiel, dargestellt in einer Aushubposition.
Fig. 2 ist eine perspektivische Ansicht des breitenvariablen Bodenbearbeitungsgeräts gemäß dem ersten Ausführungsbeispiel, dargestellt in einer Arbeitsposition.
Fig. 3 ist eine perspektivische Ansicht des breitenvariablen Bodenbearbeitungsgeräts gemäß dem ersten Ausführungsbeispiel, dargestellt bei einer maximalen Bearbeitungsbreite.
Fig. 4 ist eine perspektivische Ansicht des breitenvariablen Bodenbearbeitungsgeräts gemäß dem ersten Ausführungsbeispiel, dargestellt bei einer minimalen Bearbeitungsbreite.
Fig. 5 ist ein Schaubild, das das breitenvariable Bodenbearbeitungsgerät gemäß dem ersten Ausführungsbeispiel schematisch zeigt.
Fig. 6 ist ein Schaubild eines breitenvariablen Bodenbearbeitungsgeräts gemäß einem zweiten Ausführungsbeispiel, schematisch gezeigt bei einer minimalen Bearbeitungsbreite.
Fig. 7 ist ein Schaubild des breitenvariablen Bodenbearbeitungsgeräts gemäß dem zweiten Ausführungsbeispiel, schematisch gezeigt bei einer mittleren Bearbeitungsbreite.
Fig. 8 ist ein Schaubild des breitenvariablen Bodenbearbeitungsgeräts gemäß dem zweiten Ausführungsbeispiel, schematisch gezeigt bei einer maximalen Bearbeitungsbreite.
Fig. 9 ist ein Schaubild eines breitenvariablen Bodenbearbeitungsgeräts gemäß einer Modifikation des zweiten Ausführungsbeispiels, schematisch dargestellt bei einer maximalen Bearbeitungsbreite.

### Ausführliche Beschreibung der Ausführungsbeispiele

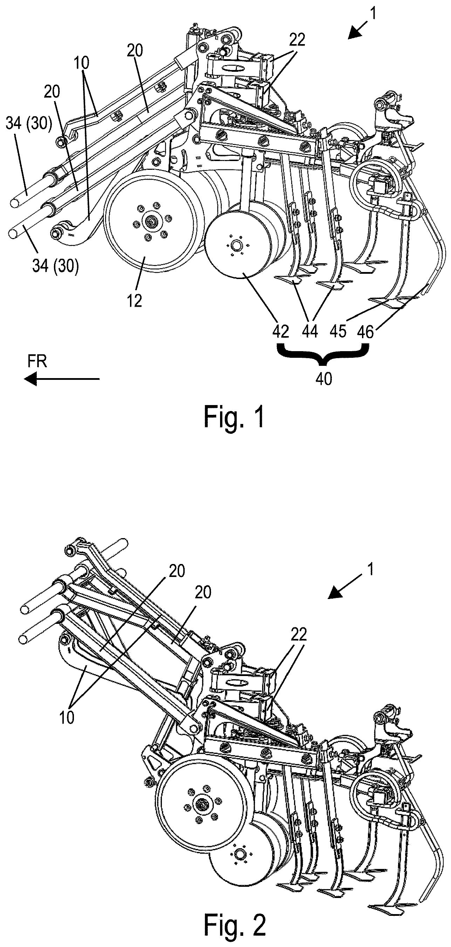

Fig. 1 bis 5 zeigen ein breitenvariables Bodenbearbeitungsgerät 1 gemäß einem ersten Ausführungsbeispiel der Erfindung.

Mit Verweis auf Fig. 1 und 2 wird der Grundaufbau des breitenvariablen Bodenbearbeitungsgeräts 1 beschrieben. Fig. 1 zeigt das Bodenbearbeitungsgerät 1 in einer Aushubposition, betrachtet von einer linken Seite, und Fig. 2 zeigt das Bodenbearbeitungsgerät 1 in einer Arbeitsposition, betrachtet von der linken Seite.

Das Bodenbearbeitungsgerät 1 hat einen nicht dargestellten Rahmen, der hinter einem nicht dargestellten Zugfahrzeug gezogen wird. Die Zugrichtung wird als Fahrtrichtung FR bezeichnet und ist in Fig. 1 angegeben. Der Rahmen kann in Form eines Anhängers gezogen werden oder unmittelbar an dem Zugfahrzeug angebracht sein.

Bei dem vorliegenden Ausführungsbeispiel sind ein erster Führungsmechanismus 10 und zwei zweite Führungsmechanismen 20 an dem Rahmen angebracht. Die Führungsmechanismen 10, 20 dienen zum Führen von Werkzeugen 40 entlang einer Führungskurve, die im Wesentlichen in einer Aushubrichtung verläuft. Ein Absenken der Werkzeuge 40 ist der Wechsel von der Aushubposition von Fig. 1 in die Arbeitsposition von Fig. 2; ein Ausheben der Werkzeuge 40 ist der umgekehrte Wechsel von der Arbeitsposition in die Aushubposition.

Der erste Führungsmechanismus 10 ist bei dem vorliegenden Ausführungsbeispiel als ein Viergelenk-Führungsmechanismus ausgeführt (s. Patentdokument 2). Der erste Führungsmechanismus 10 hat ein Stellglied (je nach Figur nicht dargestellt bzw. nicht gekennzeichnet), durch welches es abgesenkt bzw. ausgehoben werden kann, um eine Aushubfunktion umzusetzen. Zudem hat der erste Führungsmechanismus 10 ein Tiefenführungselement 12, das als ein Stützrad ausgeführt ist, jedoch sind auch andere Arten der Tiefenführung möglich, beispielsweise einen Schlitten oder eine Kufe. Durch das Tiefenführungselement 12 wird die Höhe des ersten Führungsmechanismus 10 über den Boden reguliert, was als Höhenregulierung bezeichnet wird. Da bei dem vorliegenden Ausführungsbeispiel der erste Führungsmechanismus 10 ein Viergelenk ist, das sowohl die Aushubfunktion als auch die Höhenregulierung aufweist, ist der erste Führungsmechanismus 10 somit ein führender Viergelenk-Führungsmechanismus.

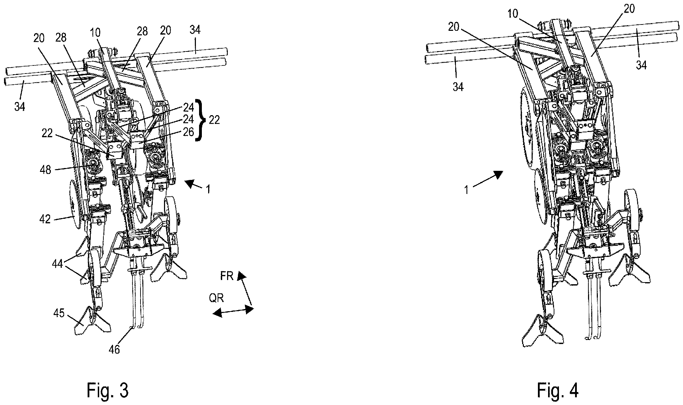

Der zweite Führungsmechanismus 20 ist bei dem vorliegenden Ausführungsbeispiel als ein nachlaufender Führungsmechanismus ausgeführt. Zum Zwecke der Nachlauffunktion ist bei dem vorliegenden Ausführungsbeispiel ein später zu Fig. 3 und 4 genauer beschriebenes Verbindungsbauteil 22 vorgesehen. Das Verbindungsbauteil 22 überträgt Kräfte in der vertikalen Richtung zwischen dem ersten Führungsmechanismus 10 und dem zweiten Führungsmechanismus 20. Somit folgt der zweite Führungsmechanismus 20 sowohl dem Absenken bzw. Ausheben als auch der Höhenregulierung des ersten Führungsmechanismus 10, was als nachlaufen bezeichnet wird. Da der zweite Führungsmechanismus 20 dem ersten Führungsmechanismus 10 nachläuft, ist es nicht erforderlich, den zweiten Führungsmechanismus 20 als betätigbares Viergelenk auszuführen, und auch das Tiefenführungselement 12 kann entfallen. Demzufolge ist bei dem vorliegenden Ausführungsbeispiel der zweite Führungsmechanismus 20 als eine Schwenkstange ausgeführt, die über eine dazugehörige Verschubstange 34 an dem Rahmen angelenkt ist. Die Verschubstange 34 ist Teil einer Breitenverstelleinheit 30 und wird später zu Fig. 3 und 4 beschrieben.

Die Werkzeuge 40 umfassen bei dem vorliegenden Ausführungsbeispiel eine Schneidscheibe 42 und zwei Hackgeräte 44. Diese Werkzeuge 42, 44 sind jeweils an den zwei zweiten Führungsmechanismen 20 angebracht. Die Schneidscheibe 42 ist mit einer Verstelleinrichtung 48 versehen (sichtbar in Fig. 3), sodass der Arbeitswinkel der Schneidscheibe 42 verstellbar ist. Zudem sind zwei Zinken 46, die mittig an dem ersten Führungsmechanismus 10 angebracht sind, sowie zwei weitere Hackgeräte 45 vorgesehen, die links und rechts von dem ersten Führungsmechanismus 10 an diesem angebracht sind. Alle Hackgeräte 44, 45 sind bei dem vorliegenden Ausführungsbeispiel als Gänsefußscharen ausgeführt. Die Auswahl der Werkzeuge sowie deren Aufteilung auf die Führungsmechanismen 10, 20 ist jedoch nicht auf das Vorgenannte beschränkt, es kann jedes geeignete Werkzeug zur Bodenbearbeitung zum Einsatz kommen und zweckmäßig an dem ersten Führungsmechanismus 10 und/oder dem zweiten Führungsmechanismus 20 angebracht sein.

Mit Verweis auf Fig. 3 und 4 wird die Breitenverstellung des Bodenbearbeitungsgeräts 1 gemäß dem ersten Ausführungsbeispiel beschrieben. Fig. 3 zeigt das Bodenbearbeitungsgerät 1 bei einer maximalen Bearbeitungsbreite, betrachtet von schräg oben, und Fig. 4 zeigt das Bodenbearbeitungsgerät 1 bei einer minimalen Bearbeitungsbreite, betrachtet von schräg oben.

Der erste Führungsmechanismus 10 ist mit Bezug auf eine Querrichtung QR, die senkrecht zu der Fahrtrichtung FR verläuft (s. Fig. 3), ortsfest angebracht. Der zweite Führungsmechanismus 20 ist mit Bezug auf die Querrichtung QR verschieblich angebracht. Genauer gesagt ist jeder der zwei zweiten Führungsmechanismen 20 an einer dazugehörigen Verschubstange 34 derart angebracht, dass der jeweilige zweite Führungsmechanismus 20 zusammen mit der Verschubstange 34 in der Querrichtung QR verschoben wird, wenn die Verschubstange 34 durch ein nicht dargestelltes Verschubstellglied in der Querrichtung QR betätigt wird. Demzufolge wird mithilfe des Verschubstellglieds und der Verschubstange 34 der Abstand zwischen dem ersten Führungsmechanismus 10 und dem jeweiligen zweiten Führungsmechanismus 20 in der Querrichtung QR geändert. Dadurch erfolgt eine Breitenverstellung, sodass das Bodenbearbeitungsgerät 1 des vorliegenden Ausführungsbeispiels ein breitenvariables Bodenbearbeitungsgerät 1 ist. Somit bilden das Verschubstellglied und die Verschubstange 34 bei dem vorliegenden Ausführungsbeispiel eine Breitenverstelleinheit 30.

Mit Verweis auf Fig. 3 ist bei dem vorliegenden Ausführungsbeispiel der linke zweite Führungsmechanismus 20 an einer unteren Verschubstange 34 angebracht, und der rechte zweite Führungsmechanismus 20 ist an einer oberen Verschubstange 34 angebracht. Zudem hat jeder zweite Führungsmechanismus 20 eine Verstärkungsstrebe 28 zur besseren Aufnahme der Kräfte in der Querrichtung QR. Bei dem vorliegenden Ausführungsbeispiel können die zwei zweiten Führungsmechanismen 20 unabhängig voneinander betätigt werden, darüber hinaus können auch weitere zweite Führungsmechanismen 20 an jeder Verschubstange 34 vorgesehen sein. Ebenfalls ist eine Anordnung möglich, bei welcher alle zweite Führungsmechanismen 20 auf derselben Seite des ersten Führungsmechanismus 10 in der Querrichtung QR angeordnet sind, beispielsweise auf der linken Seite in Fig. 3. Darüber hinaus ist es möglich, den zweiten Führungsmechanismus 20 gleitbar an der jeweiligen Verschubstange 34 anzubringen und den zweiten Führungsmechanismus 20 direkt mit dem Verschubstellglied zu betätigen. Auch in diesem Fall ist eine gleichzeitige Betätigung mehrerer zweiten Führungsmechanismen 20 mit einem gemeinsamen Verschubstellglied möglich.

Jeder zweite Führungsmechanismus 20 ist über das dazugehörige Verbindungsbauteil 22 mit dem ersten Führungsmechanismus 10 verbunden, um diesem nachzulaufen. Für die Breitenverstellung ist es zudem erforderlich, dass das Verbindungsbauteil 22 eine Bewegung bzw. Verschiebung des zweiten Führungsmechanismus 20 relativ zu dem ersten Führungsmechanismus 10 in der Querrichtung QR ermöglicht. Bei dem vorliegenden Ausführungsbeispiel ist dies durch einen Winkelteiler umgesetzt. Genauer gesagt hat der Winkelteiler (das Verbindungsbauteil 22) zwei Gelenkglieder 24, die den ersten Führungsmechanismus 10 und den zweiten Führungsmechanismus 20 mit einem Mittelteil 26 verbinden. Das Mittelteil 26 ist bei dem vorliegenden Ausführungsbeispiel eine Platte mit zwei vertikal verlaufenden Bolzen, kann jedoch auch ein einzelner vertikal verlaufender Bolzen sein. Die Gelenkglieder 24 sind über eine Verzahnung derart verbunden, dass eine gedachte Linie, die in der Mitte des Mittelteils 26 normal auf das Mittelteil 26 fällt, den Winkel zwischen den Gelenkgliedern 24 halbiert. Demgemäß weisen die Gelenkglieder 24 immer den gleichen Winkel zu dem Mittelteil 26 auf (vgl. Fig. 3 und Fig. 4). Die Gelenkglieder 24 sind vorliegend zudem mit vertikal verlaufenden Bolzen an dem entsprechenden Führungsmechanismus 10, 20 angelenkt und haben ihre Breite in der vertikalen Richtung. Demzufolge ist der Winkelteiler als das Verbindungsbauteil 22 in der Lage, Kräfte in der vertikalen Richtung optimal zu übertagen und gleichzeitig die relative Bewegung in der Querrichtung QR zwischen dem ersten Führungsmechanismus 10 und dem zweiten Führungsmechanismus 20 mit einem minimalen Widerstand zu ermöglichen.

Das Verbindungsbauteil 22 ist nicht auf den Winkelteiler beschränkt und kann jede Gestaltung haben, bei der die vertikalen Kräfte übertragen werden und gleichzeitig die horizontale Breitenverstellung ermöglicht wird. Beispielsweise kann ein Viergelenk, ein Teleskoprohr, ein linear verstellbarer Mechanismus oder ein lineares Stellglied zum Einsatz kommen. Im Falle des linearen Stellglieds kann dieses die Funktion der Breitenverstelleinheit 30 übernehmen und den Abstand zwischen dem ersten Führungsmechanismus 10 und dem zweiten Führungsmechanismus 20 verstellen. Je nach Einsatzfall kann es zudem zweckmäßig sein, die Kraftübertragung in der Querrichtung QR unterbrechen zu können, beispielsweise durch lösbare Bolzen oder durch Kupplungselemente.

Mit dem Bodenbearbeitungsgerät 1 des ersten Ausführungsbeispiels ist die Breitenverstellung zwischen der in Fig. 3 gezeigten maximalen Breite und der in Fig. 4 gezeigten minimalen Bearbeitungsbreite stufenlos möglich. Bei dem ersten Ausführungsbeispiel weist die Breitenverstelleinheit 30 die Verschubstange 34 und das Verschubstellglied auf, wobei das Verbindungsbauteil 22 die Nachlauffunktion gewährleistet und gleichzeitig die Breitenverstellung ermöglicht. Somit werden mit dem Bodenbearbeitungsgerät 1 des ersten Ausführungsbeispiels die eingangs beschriebenen Vorteile erzielt.

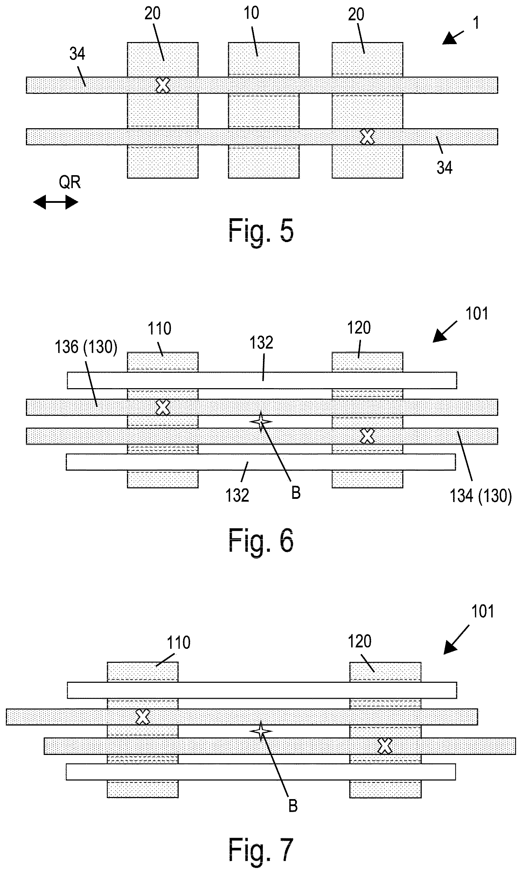

Zusammenfassend ist das Bodenbearbeitungsgerät 1 des ersten Ausführungsbeispiels in Fig. 5 schematisch dargestellt, betrachtet in Richtung eines Hecks (d.h. von vorne). Der erste Führungsmechanismus 10 ist mittig angeordnet, je ein zweiter Führungsmechanismus 20 ist links und rechts davon angeordnet. Eine obere Verschubstange 34 ist mit einem (dem linken in Fig. 5) der zweiten Führungsmechanismen 20 verbunden, was mit einem X gekennzeichnet ist. Die obere Verschubstange 34 ist mit dem ersten Führungsmechanismus 10 sowie dem anderen (dem linken) der zweiten Führungsmechanismen 20 nicht verbunden, was mit gestrichelten Linien gekennzeichnet ist. Gleichermaßen ist die untere Verschubstange 34 nur mit dem einen (dem rechten in Fig. 5) der zweiten Führungsmechanismen 20 verbunden.

### Zweites Ausführungsbeispiel

Fig. 6 bis 8 zeigen ein breitenvariables Bodenbearbeitungsgerät 101 gemäß einem zweiten Ausführungsbeispiel der Erfindung. Die Darstellung erfolgt analog zu derjenigen von Fig. 5 schematisch (nicht maßstabsgetreu), da die konstruktiven Einzelheiten denjenigen des ersten Ausführungsbeispiels entsprechen, soweit nicht anders angegeben.

Fig. 6 zeigt das Bodenbearbeitungsgerät 101 bei einer minimalen Bearbeitungsbreite. Bei dem vorliegenden Ausführungsbeispiel sind sowohl ein erster Führungsmechanismus 110 als auch ein zweiter Führungsmechanismus 120 als Viergelenk-Führungsmechanismen ausgeführt. Vorliegend hat jeder Führungsmechanismus 110, 120 ein Tiefenführungselement (nicht dargestellt), sodass die Höhenregulierung für jeden Führungsmechanismus 110, 120 eigenständig erfolgt. Die Aushubfunktion ist bei dem vorliegenden Ausführungsbeispiel mit je einem nicht dargestellten Stellglied für jeden Führungsmechanismus 110, 120 umgesetzt. Jedoch ist es problemlos möglich, stattdessen das Verbindungsbauteil 22 des ersten Ausführungsbeispiels zu verwenden und einen Aufbau mit einem führenden ersten Führungsmechanismus 110 und einem nachlaufenden zweiten Führungsmechanismus 120 umzusetzen.

Das Bodenbearbeitungsgerät 101 des vorliegenden Ausführungsbeispiels ist mit einer Breitenverstelleinheit 130 versehen, die eine Verschubstange 136 des ersten Führungsmechanismus 110, eine Verschubstange 134 des zweiten Führungsmechanismus 120 und zwei Führungsstangen 132 aufweist.

Die Verschubstange 134 des zweiten Führungsmechanismus 120 gemäß dem zweiten Ausführungsbeispiel entspricht der Verschubstange 34 gemäß dem ersten Ausführungsbeispiel und ist mit dem zweiten Führungsmechanismus 120 verbunden, um diesen in der Querrichtung QR zu betätigen. Auf gleiche Weise ist die Verschubstange 136 mit dem ersten Führungsmechanismus 110 verbunden, um diesen in der Querrichtung QR zu betätigen. Die Breitenverstellung der Führungsmechanismen 110, 120 erfolgt über je ein nicht dargestelltes Verschubstellglied, das die zum jeweiligen Führungsmechanismus 110, 120 gehörende Verschubstange 136, 134 betätigt, um den jeweiligen Führungsmechanismus 110, 120 in der Breitenrichtung (Querrichtung QR) zu verstellen. Somit sind beide Führungsmechanismen 110, 120 in der Querrichtung QR verschieblich. Zudem sind die zwei Führungsstangen 132 vorgesehen, auf welchen beide Führungsmechanismen 110, 120 gleitbar gelagert sind, d.h. keine Kräfte in der Querrichtung QR aufnehmen, aber in der Fahrtrichtung FR und der vertikalen Richtung gestützt werden. Demnach verbessern die optionalen Führungsstangen 132 die Stabilität. Die Stützwirkung der Führungsstangen 132 kann jedoch vollständig oder teilweise durch die Verschubstangen und/oder andere Stützeinrichtungen umgesetzt sein oder ganz weggelassen sein.

Bei dem vorliegenden Ausführungsbeispiel werden die Führungsmechanismen 110, 120 gleichmäßig verstellt, sodass sich beide Führungsmechanismen 110, 120 in entgegengesetzten Richtungen um gleiche Abstände von einem in etwa mittig dazwischenliegend gedachten Bezugspunkt B entfernen. Die gleichmäßige Verstellung ist bei der Zusammenschau der Fig. 6 bis 8 gut erkennbar. Jedoch ist es auch möglich, den ersten Führungsmechanismus 110 und den zweiten Führungsmechanismus 120 ungleichmäßig und/oder in dieselbe Richtung statt in entgegengesetzten Richtungen zu betätigen. Beispielsweise können der erste Führungsmechanismus 110 und der zweite Führungsmechanismus 120 um den gleichen Betrag nach links betätigt werden, um einen Versatz auszugleichen, z.B. um von einer Bearbeitung der Pflanzenreihe zu einer Bearbeitung neben der Pflanzenreihe zu wechseln.

Das Bodenbearbeitungsgerät 101 des zweiten Ausführungsbeispiels erzielt dieselben Vorteile wie diejenigen des Bodenbearbeitungsgerät 1 des ersten Ausführungsbeispiels.

### Modifikationen

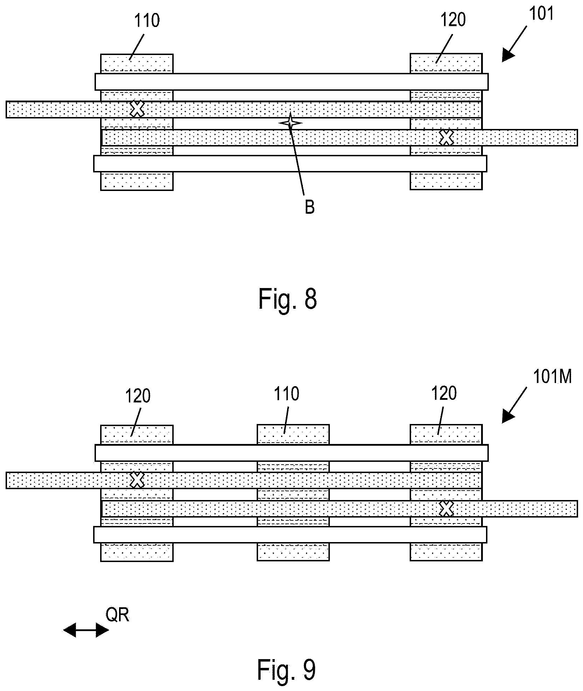

Fig. 9 zeigt ein breitenvariables Bodenbearbeitungsgerät 101M gemäß einer Modifikation des zweiten Ausführungsbeispiels. Während bei dem zweiten Ausführungsbeispiel der erste Führungsmechanismus 110 und der zweite Führungsmechanismus 120 in der Querrichtung QR verschieblich sind, ist bei dieser Modifikation ein mit Bezug auf die Querrichtung QR ortsfester erster Führungsmechanismus 110 vorgesehen, und auf beiden Seiten davon sind zwei zweite Führungsmechanismen 120 vorgesehen, die gleichmäßig betätigt werden. Die Betätigung der zwei zweiten Führungsmechanismen 120 ist analog zu der Betätigung des ersten Führungsmechanismus 110 und des zweiten Führungsmechanismus 120 des zweiten Ausführungsbeispiels, daher wird diese nicht näher beschrieben. Die Modifikation ist sowohl in der nahlaufenden Variante als auch in der Variante umsetzbar, bei welcher jeder Führungsmechanismus eine Aushubfunktion und eine Höhenregulierung aufweist.

In der vorangehenden Beschreibung wurden Führungsmechanismen beschrieben, die in der Querrichtung QR verschieblich sind. Jedoch ist die vorliegende Erfindung nicht darauf beschränkt, und die Führungsmechanismen können eine andere Bewegung ausführen, beispielsweise eine Schwenkbewegung, die eine Verschiebungskomponente in der Querrichtung QR hat.

In der vorangehenden Beschreibung wurden mehrere Stellglieder beschrieben, nämlich das Stellglied des ersten und/oder zweiten Führungsmechanismus sowie das Verschubstellglied. Die Betätigungsart aller Stellglieder ist nicht beschränkt und kann zweckmäßig hydraulisch, elektromechanisch oder manuell erfolgen, wodurch die eingangs beschriebenen Vorteile erzielt werden.

Die vorliegende Erfindung kommt bevorzugt in der Landwirtschaft zur Bearbeitung von Erdreich auf Nutzflächen zum Einsatz.

Ein breitenvariables Bodenbearbeitungsgerät hat einen Rahmen; einen führenden ersten Viergelenk-Führungsmechanismus, der mit dem Rahmen verbunden ist und ein Tiefenführungselement, das auf dem Boden fährt, um eine Höhe des ersten Führungsmechanismus über den Boden zu regulieren, sowie ein Stellglied hat, das die Höhe des ersten Führungsmechanismus zwischen einer bodennahen Arbeitsposition, in welcher er durch das Tiefenführungselement geführt wird, und einer bodenfernen Aushubposition betätigt, in welcher er nicht durch das Tiefenführungselement geführt wird; einen nachlaufenden zweiten Führungsmechanismus, der mit dem Rahmen verbunden ist und mindestens ein Werkzeug zur Bodenbearbeitung hat; ein Verbindungsbauteil, welches den ersten Führungsmechanismus und den zweiten Führungsmechanismus derart verbindet, dass der zweite Führungsmechanismus der Höhe des ersten Führungsmechanismus folgt und der zweite Führungsmechanismus in einer Querrichtung, die quer zu der Fahrtrichtung des Rahmens verläuft, bewegt, vorzugsweise verschoben, werden kann; und eine Breitenverstelleinheit, die einen Abstand in der Querrichtung zwischen dem ersten Führungsmechanismus und dem zweiten Führungsmechanismus verstellen kann.

## Patentansprüche

1. Breitenvariables Bodenbearbeitungsgerät (1) mit:
einem hinter einem Zugfahrzeug zu ziehenden Rahmen;
einem ersten Führungsmechanismus (10), der als führender Viergelenk-Führungsmechanismus ausgeführt ist und mit dem Rahmen verbunden ist und
ein Tiefenführungselement (12), das auf dem Boden fährt, um eine Höhe des ersten Führungsmechanismus (10) über den Boden zu regulieren, und
ein Stellglied hat, das die Höhe des ersten Führungsmechanismus (10) zwischen einer bodennahen Arbeitsposition, in welcher der erste Führungsmechanismus (10) durch das Tiefenführungselement (12) geführt wird, und einer bodenfernen Aushubposition betätigt, in welcher der erste Führungsmechanismus (10) nicht durch das Tiefenführungselement (12) geführt wird;
einem zweiten Führungsmechanismus (20), der als nachlaufender Führungsmechanismus ausgeführt ist, mit dem Rahmen verbunden ist und mindestens ein Werkzeug (40) zur Bodenbearbeitung hat;
einem Verbindungsbauteil (22), welches den ersten Führungsmechanismus (10) und den zweiten Führungsmechanismus (20) derart verbindet, dass (i) der zweite Führungsmechanismus (20) der Höhe des ersten Führungsmechanismus (10) folgt und (ii) der zweite Führungsmechanismus (20) in einer Querrichtung (QR), die quer zu der Fahrtrichtung (FR) des Rahmens verläuft, bewegt, vorzugsweise verschoben, werden kann; und
einer Breitenverstelleinheit (30), die einen Abstand in der Querrichtung (QR) zwischen dem ersten Führungsmechanismus (10) und dem zweiten Führungsmechanismus (20) verstellen kann.

2. Breitenvariables Bodenbearbeitungsgerät (101) mit:
einem hinter einem Zugfahrzeug zu ziehenden Rahmen;
einem ersten Führungsmechanismus (110), der als Viergelenk-Führungsmechanismus ausgeführt ist;
einem zweiten Führungsmechanismus (120), der als Viergelenk-Führungsmechanismus ausgeführt ist und mindestens ein Werkzeug (40) zur Bodenbearbeitung hat,
wobei jeder des ersten Führungsmechanismus (110) und des zweiten Führungsmechanismus (120) mit dem Rahmen verbunden ist und ein Tiefenführungselement (12) hat, das auf dem Boden fährt, um eine Höhe des jeweiligen Führungsmechanismus über den Boden zu regulieren, und wobei
mindestens einer von dem ersten Führungsmechanismus (110) und dem zweiten Führungsmechanismus (120) ein Stellglied hat, das die Höhe des jeweiligen Führungsmechanismus zwischen einer bodennahen Arbeitsposition, in welcher der jeweilige Führungsmechanismus durch sein Tiefenführungselement (12) geführt wird, und einer bodenfernen Aushubposition betätigt, in welcher der jeweilige Führungsmechanismus nicht durch sein Tiefenführungselement (12) geführt wird; und
einer Breitenverstelleinheit (130), die einen Abstand in einer Querrichtung (QR), die quer zu der Fahrtrichtung (FR) des Rahmens verläuft, zwischen dem ersten Führungsmechanismus (110) und dem zweiten Führungsmechanismus (120) verstellen kann.

3. Breitenvariables Bodenbearbeitungsgerät (1; 101) nach Anspruch 1 oder 2, wobei der erste Führungsmechanismus (10, 110) derart mit dem Rahmen verbunden ist, dass er in der Querrichtung (QR) relativ zu dem Rahmen nicht beweglich ist, vorzugsweise nicht verschieblich ist.

4. Breitenvariables Bodenbearbeitungsgerät (1; 101) nach Anspruch 1 oder 2, wobei der erste Führungsmechanismus (10, 110) derart mit dem Rahmen verbunden ist, dass er in der Querrichtung (QR) relativ zu dem Rahmen beweglich, vorzugsweise verschieblich, ist.

5. Breitenvariables Bodenbearbeitungsgerät (101) nach Anspruch 4, wobei die Breitenverstelleinheit (130) den Abstand in der Querrichtung (QR) zwischen dem ersten Führungsmechanismus (110) und dem zweiten Führungsmechanismus (120) gleichmäßig relativ zu dem Rahmen ändert.

6. Breitenvariables Bodenbearbeitungsgerät (101) nach einem der Ansprüche 1 bis 5, wobei der zweite Führungsmechanismus (120) ein Viergelenk-Führungsmechanismus ist und ein Tiefenführungselement sowie ein Stellglied hat, das die Höhe des zweiten Führungsmechanismus (120) zwischen seiner Arbeitsposition und seiner Aushubposition betätigt.

7. Breitenvariables Bodenbearbeitungsgerät (101) nach einem der Ansprüche 2 bis 5, soweit von Anspruch 2 abhängig, wobei
der erste Führungsmechanismus (110) ein führender Führungsmechanismus ist, der das Stellglied hat, und
der zweite Führungsmechanismus (120) ein nachlaufender Führungsmechanismus ist, der mit einem Verbindungsbauteil (22) versehen ist, welches den ersten Führungsmechanismus (110) und den zweiten Führungsmechanismus (120) derart verbindet, dass (i) der zweite Führungsmechanismus (120) der Höhe des ersten Führungsmechanismus (110) folgt und (ii) der zweite Führungsmechanismus (120) in einer Querrichtung (QR), die quer zu der Fahrtrichtung (FR) des Rahmens verläuft, bewegt, vorzugsweise verschoben, werden kann.

8. Breitenvariables Bodenbearbeitungsgerät (1; 101) nach einem der Ansprüche 1, 3 bis 5, soweit von 1 abhängig, oder 7, wobei das Verbindungsbauteil (22) die Verbindung zum Übertragen von Kräften in vertikaler Richtung zwischen dem ersten Führungsmechanismus (10; 110) und dem zweiten Führungsmechanismus (20; 120) unterbrechen kann.

9. Breitenvariables Bodenbearbeitungsgerät (1; 101) nach einem der Ansprüche 1 bis 8, ferner mit mindestens einem weiteren zweiten Führungsmechanismus (20; 120), wobei vorzugsweise
alle zweite Führungsmechanismen (20; 120) auf beiden Seiten des ersten Führungsmechanismus (10; 110) in der Querrichtung (QR) aufgeteilt sind, oder
alle zweite Führungsmechanismen (20; 120) auf einer Seite des ersten Führungsmechanismus (10; 110) in der Querrichtung (QR) angeordnet sind.

10. Breitenvariables Bodenbearbeitungsgerät (1; 101) nach einem der Ansprüche 1 bis 9, wobei das Verbindungsbauteil (22) ein Winkelteiler ist, der
zwei Gelenkglieder (24), wovon eines an dem ersten Führungsmechanismus (10; 110) angelenkt ist und das andere an dem zweiten Führungsmechanismus (20; 120) angelenkt ist; und
ein Mittelteil (26) aufweist, an welchem die zwei Gelenkglieder (24) angelenkt sind.

11. Breitenvariables Bodenbearbeitungsgerät (1; 101) nach Anspruch 10, wobei
die Gelenkglieder (24) ihre Anlenkachsen und ihre Breite in der vertikalen Richtung haben, oder die Gelenkglieder (24) ihre Anlenkachsen in der horizontalen Richtung haben.

12. Breitenvariables Bodenbearbeitungsgerät (1; 101) nach einem der Ansprüche 1 bis 9, wobei das Verbindungsbauteil (22) ein linear verstellbarer Mechanismus ist, wobei vorzugsweise der linear verstellbare Mechanismus als Teleskoprohr ausgeführt ist oder als lineares Stellglied ausgeführt ist, das den Abstand in der Querrichtung (QR) einstellt und Kräfte in der vertikalen Richtung überträgt.

13. Breitenvariables Bodenbearbeitungsgerät (1; 101) nach einem der Ansprüche 1 bis 12, wobei die Breitenverstelleinheit (30; 130) eine Verschubstange (34; 134) aufweist, an welcher der zweite Führungsmechanismus (20; 120) angelenkt ist, und/oder eine Verschubstange (136) aufweist, an welcher der erste Führungsmechanismus (110) angelenkt ist.

14. Breitenvariables Bodenbearbeitungsgerät (1; 101) nach Anspruch 13, wobei eine Verschiebung der Verschubstange (34; 134, 136) in der Querrichtung (QR) eine Bewegung, vorzugsweise Verschiebung, des dazugehörigen Führungsmechanismus (20; 110, 120) in der Querrichtung (QR) zur Folge hat und die Verschubstange (34; 134, 136) über ein Verschubstellglied betätigt wird.

15. Breitenvariables Bodenbearbeitungsgerät (1; 101) nach Anspruch 14, wobei mehrere zweite Führungsmechanismen (20; 120) mit einer gemeinsamen Verschubstange (34; 134, 136) verbunden sind, sodass die mehreren zweiten Führungsmechanismen (20; 120) bei einer Betätigung der Verschubstange (34; 134, 136) gemeinsam verschoben werden.

16. Breitenvariables Bodenbearbeitungsgerät (1; 101) nach Anspruch 13, wobei der zweite Führungsmechanismus (20; 120) gleitbar auf der Verschubstange (34; 134, 136) gelagert ist, sodass er in der Querrichtung (QR) beweglich, vorzugsweise verschieblich, ist, und wobei der zweite Führungsmechanismus (20; 120) über ein Verschubstellglied in der Querrichtung (QR) betätigt wird.

17. Breitenvariables Bodenbearbeitungsgerät (1; 101) nach Anspruch 16, wobei mehrere zweite Führungsmechanismen (20; 120) durch ein gemeinsames Verschubstellglied betätigt werden.

18. Breitenvariables Bodenbearbeitungsgerät (1; 101) nach einem der Ansprüche 13 bis 17, ferner mit einer Führungsstange (132), auf der der erste Führungsmechanismus (10; 110) und/oder der zweite Führungsmechanismus (20; 120) gleitbar gelagert ist/sind, sodass die Führungsstange (132) nicht in der Querrichtung (QR) verschoben wird, wenn der darauf gelagerte Führungsmechanismus in der Querrichtung (QR) verschoben wird.

19. Breitenvariables Bodenbearbeitungsgerät (1; 101) nach einem der Ansprüche 13 bis 18, wobei der zweite Führungsmechanismus (20; 120) eine Verstärkungsstrebe (28) hat, wovon ein Ende an der Verschubstange (34; 134, 136) angelenkt oder verbunden ist und das andere Ende an dem zweiten Führungsmechanismus (20; 120) angelenkt oder verbunden ist.

20. Breitenvariables Bodenbearbeitungsgerät (1; 101) nach einem der Ansprüche 1 bis 19, wobei das Stellglied des ersten Führungsmechanismus (10; 110) und/oder das Stellglied des zweiten Führungsmechanismus (20; 120) und/oder das Verschubstellglied hydraulisch, elektromechanisch und/oder manuell betätigt wird/werden.

21. Breitenvariables Bodenbearbeitungsgerät (1; 101) nach einem der Ansprüche 1 bis 20, wobei der erste Führungsmechanismus (10, 110) ebenfalls mindestens ein Werkzeug (40) zur Bodenbearbeitung hat.

22. Breitenvariables Bodenbearbeitungsgerät (1; 101) nach einem der Ansprüche 1 bis 21, wobei das Werkzeug (40) oder mindestens eines der Werkzeuge eine Schneidscheibe (42), wobei vorzugsweise ein Arbeitswinkel der Schneidscheibe (42) verstellbar ist, ein Hackgerät (44) oder ein Zinken (46) ist.

23. Breitenvariables Bodenbearbeitungsgerät (1; 101) nach einem der Ansprüche 1 bis 22, wobei das Tiefenführungselement (12) ein Stützrad oder ein Schlitten ist.
